# EUROPÄISCHE PATENTSCHRIFT

(11) **EP 2 978 577 B1**
(45) Veröffentlichungstag und Bekanntmachung des Hinweises auf die Patenterteilung: **31.10.2018**
(21) Anmeldenummer: 14714625.2
(22) Anmeldetag: 21.03.2014
(51) Int. Cl.: B29B 15/10, B29C 70/54

(54) **VERFAHREN UND VORRICHTUNG ZUM IMPRÄGNIEREN VON FASERHALBZEUGEN**
METHOD AND APPARATUS FOR IMPREGNATING SEMI-FINISHED FIBROUS PRODUCTS
PROCÉDÉ ET DISPOSITIF SERVANT À IMPRÉGNER DES DEMI-PRODUITS À BASE DE FIBRES

(30) Priorität: 28.03.2013 DE 102013205685
(43) Veröffentlichungstag der Anmeldung: 03.02.2016
(73) Patentinhaber: Universität Stuttgart, 70174 Stuttgart (DE)
(72) Erfinder: FALK, Gerd, 70372 Stuttgart (DE); BLANDL, Markus, 70825 Stuttgart (DE)
(74) Vertreter: Patentanwälte Ruff, Wilhelm, Beier, Dauster & Partner mbB
(86) Internationale Anmeldenummer: PCT/EP2014/055750
(87) Internationale Veröffentlichungsnummer: WO 2014/154589

(56) Entgegenhaltungen:
- EP-A1- 0 525 263
- EP-A1- 1 413 421
- EP-A1- 1 555 104
- WO-A1-2012/117869
- DE-A1-102011 056 703
- US-A- 4 865 787
- US-A- 4 942 013

## Beschreibung

### Anwendungsgebiet und Stand der Technik

Die Erfindung betrifft ein Verfahren zum Imprägnieren von Faserhalbzeugen sowie eine zu dessen Durchführung geeignete Vorrichtung.

Es ist aus dem Stand der Technik bekannt, Faserhalbzeuge in Harzbädern bzw. Mischungsanlagen mit Imprägniermitteln zu beschichten bzw. diese Faserhalbzeuge zu imprägnieren bzw. zu infiltrieren. Dabei wird in aller Regel ein Faserhalbzeug alleine bzw. ein einzelner Strang durch das Harzbad geführt bzw. imprägniert. Dies bedeutet, dass das imprägnierte bzw. mit Imprägniermittel beschichtete oder versehene Faserhalbzeug an sich aufgewickelt werden müsste auf einen Aufnahmeträger, zusammengelegt werden odgl.. Bei manchen Verfahren zur Herstellung von Bauteilen mit Faserhalbzeugen kann auch vorgesehen sein, die Faserhalbzeuge direkt nach dem Imprägnieren zu verbauen bzw. auf ein Bauteil zu wickeln odgl.. Nachteilig hierbei ist aber, dass dann das Harzbad bzw. die Imprägnierung räumlich und zeitlich nahe bei der Verarbeitung liegen muss, was vom Fertigungsvorgang her nachteilig ist. Werden die imprägnierten Faserhalbzeuge danach wieder auf einen Aufnahmeträger odgl. aufgewickelt, so besteht häufig das Problem, dass das Führen der Faserhalbzeuge zum Aufwickeln große Verunreinigungen bewirken kann, da die Faserhalbzeuge ja mit Imprägniermittel versehen sind.

Aus der EP 1 555 104 A1 sind ein Verfahren und eine Vorrichtung bekannt, um in einem so genannten RTM-Verfahren ein Substrat aus Verstärkungsfasern mit Kunstharz zu versehen bzw. zu imprägnieren. Dabei werden die Verstärkungsfasern in Schichten flach aufeinander gelegt. Ein entsprechendes Verfahren ist aus der US 4,942,013 A, der EP 525 263 A1, der EP 1 413 421 A1 und der WO 2012/117869 A1 bekannt. Dabei wird das Anlegen von Überdruck an das Harz beim Einbringen sowie das Anlegen von Unterdruck beim Absaugen des Harzes aus einer Pressform beschrieben. Auch aus der DE 10 2011 056 703 A1 ist ein solches Verfahren bekannt samt entsprechender Vorrichtung.

Im Dokument US 4,865,787 ist die Imprägnierung eines aufgewickelten Faserhalbzeugs durch Zentrifugierung offenbart.

### Aufgabe und Lösung

Der Erfindung liegt die Aufgabe zugrunde, ein eingangs genanntes Verfahren sowie eine Vorrichtung zum Imprägnieren von Faserhalbzeugen zu schaffen, mit denen Probleme des Standes der Technik gelöst werden können und es insbesondere möglich ist, einfach und gebrauchstauglich sowie möglichst flexibel Faserhalbzeuge zu imprägnieren.

Gelöst wird diese Aufgabe durch ein Verfahren mit den Merkmalen des Anspruchs 1 sowie eine Vorrichtung mit den Merkmalen des Anspruchs 9. Vorteilhafte sowie bevorzugte Ausgestaltungen der Erfindung sind Gegenstand der weiteren Ansprüche und werden im Folgenden näher erläutert. Dabei werden manche der Merkmale nur für das Verfahren oder nur für die Vorrichtung beschrieben. Sie sollen jedoch unabhängig davon sowohl für das Verfahren als auch für die Vorrichtung selbständig gelten können. Der Wortlaut der Ansprüche wird durch ausdrückliche Bezugnahme zum Inhalt der Beschreibung gemacht.

Die Faserhalbzeuge liegen in Form von langen bzw. endlosen Fasern, Faserbündeln, Fasergeweben, Fasergelegen, Fasergeflechten odgl.. vor. Das Imprägniermittel kann grundsätzlich ein beliebiges Imprägniermittel für derartige Faserhalbzeuge sein, vorteilhaft ein Harz, damit diese anschließend auf im Wesentlichen übliche Art und Weise weiterverarbeitet werden können, insbesondere zur Herstellung von faserverstärkten Bauteilen verwendet werden können.

Es ist vorgesehen, dass die Faserhalbzeuge auf einen Aufnahmeträger oder allgemein eine Aufnahme bzw. einen Träger oder Aufnahmekörper aufgewickelt werden, im Endergebnis also aufgebracht werden. Dieser Aufnahmeträger ist dabei durchlässig für das Imprägniermittel ausgebildet. Vorzugsweise werden die Faserhalbzeuge dabei in mehreren Lagen aufeinander und übereinander aufgebracht. Untere Lagen liegen dabei nahe an dem Aufnahmeträger bzw. die unterste Lage liegt direkt auf dem Aufnahmeträger. Je höher die Lagen werden, desto weiter entfernt liegen sie bzw. die oberen Lagen liegen weiter entfernt von dem Aufnahmeträger. Insgesamt bilden die Faserhalbzeuge eine Art Faserhalbzeugpaket. Bei Rovings mit wenigen tausend Fasern, beispielsweise 3.000 Fasern, können es insgesamt 80 Lagen oder auch mehr sein, bei Rovings mit deutlich mehr Fasern, beispielsweise 50.000 Fasern, können es mindestens 5 bis 20 Lagen sein.

In einem weiteren Schritt wird das Imprägniermittel in bzw. auf die Faserhalbzeuge gebracht als Infiltrieren bzw. Imprägnieren. Dabei geht es mindestens einmal durch den durchlässigen Aufnahmeträger hindurch. Bei der Erfindung geht das Imprägniermittel zuerst einmal durch den Aufnahmeträger hindurch in und auf die Faserhalbzeuge, also zuerst in den Aufnahmeträger und dann durch diesen hindurch in die Faserhalbzeuge. Ein Entfernen überschüssigen Imprägniermittels kann dann von außen erfolgen. Somit dringt das Imprägniermittel zuerst, weil es ja durch den durchlässigen Aufnahmeträger hindurchgeht, in die darauf liegenden bzw. am nächsten angeordneten Lagen ein, also in die unteren Lagen, und danach in die darüber liegenden. Auf diesem Weg durchdringt das Imprägniermittel dann alle Faserhalbzeuge bzw. das gesamte Faserhalbzeugpaket und somit auch die oberen Lagen. Im Wesentlichen wird somit von innen nach außen imprägniert bzw. das Imprägniermittel kommt von innen nach außen an die Faserhalbzeuge.

So ist mit einer Kombination aus Überdruck und Unterdruck bzw. mit einem Druckunterschied ein gutes und schnelles Imprägnieren möglich, und zwar besser als durch Eintauchen oder Besprühen.

Somit ist es mit der Erfindung möglich, als Resultat eine gewisse Menge an Faserhalbzeugen zu erhalten, die im aufgewickelten bzw. kompakten Zustand imprägniert werden können. Dadurch ist es beispielsweise möglich, das Aufwickeln der Faserhalbzeuge auf den Aufnahmeträger zeitlich sowie räumlich vollständig von dem Imprägnieren bzw. Versehen mit Imprägniermittel zu trennen. Das sozusagen trockene Aufwickeln der Faserhalbzeuge auf den Aufnahmeträger kann beispielsweise bei einem Hersteller solcher Faserhalbzeuge durchgeführt werden. Diese aufgewickelten Aufnahmeträger können dann beliebig transportiert und gelagert werden. Ein unter Umständen anderes Unternehmen kann dann zeitlich und räumlich völlig unabhängig die Aufnahmeträger mit den Faserhalbzeugen bei Bedarf auch kurzfristig, beispielsweise aus einem eigenen Lager heraus, nehmen und kurz vor der Verarbeitung auf relativ einfache Art und Weise mit dem Imprägniermittel versehen. Aufwändige Harzbäder oder Führungen für die Faserhalbzeuge sind dann nicht mehr notwendig. Des Weiteren kann eine erheblich einfachere und sauberere Verarbeitung erreicht werden. Die Maschinen zum Herstellen von Bauteilen mit den imprägnierten Faserhalbzeugen können auch erheblich einfacher und/oder leistungsfähiger ausgebildet sein.

In weiterer Ausgestaltung der Erfindung ist es möglich, überschüssiges oder nicht gewünschtes Imprägniermittel nach dem Imprägnieren der Faserhalbzeuge bzw. des Volumens von Faserhalbzeugen auf dem Aufnahmeträger zu entfernen. So kann vermieden werden, dass dieses überschüssige Imprägniermittel herabtropft oder herabfällt und Probleme bzw. Verunreinigungen hervorruft. Vor allem aber kann auf diese Art und Weise der Gehalt an Imprägniermittel an den Faserhalbzeugen eingestellt werden, was vor allem für die Verarbeitungsqualität der imprägnierten Faserhalbzeuge bzw. deren Gewichts- und Festigkeitseigenschaften von großer Bedeutung ist. Es hat sich im Rahmen der Erfindung herausgestellt, dass so die Menge an Imprägniermittel an den Faserhalbzeugen so sehr gut eingestellt werden kann.

Vorteilhaft kann das überschüssige Imprägniermittel abgesaugt werden bzw. durch Unterdruck entfernt werden. Besonders vorteilhaft erfolgt dies von außen bzw. von den oberen oder obersten Lagen der Faserhalbzeuge. So kann das Imprägniermittel sozusagen von innen in die Menge an Faserhalbzeugen mit Überdruck bzw. relativem Überdruck eingebracht werden, durch das Volumen an Faserhalbzeugen hindurchgehen und dann, nach dem Durchdringen sämtlicher Faserhalbzeuge an dem Aufnahmeträger, abgesaugt werden, wo es überschüssig ist. Da das Imprägniermittel beim Absaugen auch sehr leicht gesammelt werden kann, kann es unter Umständen auch direkt weiterverwendet werden zum Imprägnieren eines weiteren Aufnahmeträgers.

Bei der Erfindung werden die Faserhalbzeuge umlaufend auf den Aufnahmeträger aufgebracht, also im Wesentlichen aufgewickelt. Dabei umgeben die Faserhalbzeuge den Aufnahmeträger zumindest bereichsweise umlaufend. Vorteilhaft umgeben die Faserhalbzeuge den Aufnahmeträger weitgehend oder ganz. Dies kann auf einen rotierenden Aufnahmeträger erfolgen, so dass er als eine Art Wickel oder Spulenkörper ausgebildet sein kann mit einem bestimmten Durchmesser. Ein derartiger Aufnahmeträger kann ähnlich ausgebildet sein wie an sich bekannte Aufnahmeträger für derartige Faserhalbzeuge oder auch allgemein lange bzw. endlose Fasern, Fäden, Schnüre odgl.. Der Aufnahmeträger weist vorteilhaft in einem Aufwickelbereich konstanten Querschnitt auf bzw. ist vorteilhaft zylindrisch. Es ist möglich, den Aufnahmeträger im Aufwickelbereich rund oder angenähert rund auszubilden, so dass sich ein Spulenkörper ergibt. An den Enden des Spulenkörpers können überstehende Begrenzungen vorgesehen sein, beispielsweise nach Art von abstehenden Scheiben oder Stäben.

Alternativ zu einem zylindrischen Spulenkörper kann in seinem Längsverlauf ein sich ändernder Querschnitt vorgesehen sein, um unterschiedliche Mengen von Faserhalbzeugen bzw. Dicken zu erzeugen. Somit können unterschiedliche Bedingungen für das von innen nach außen durchdringende Imprägniermittel geschaffen werden.

Bei einem derartigen Aufnahmeträger mit Spulenkörper ist eben ein Aufwickeln der Faserhalbzeuge sehr leicht, schnell und vor allem auch mit definiertem Druck möglich, so dass genau eingestellt werden kann, wie eng die Faserhalbzeuge aufeinanderliegen. Dies ist von Bedeutung, um anhand bekannter Parameter das Imprägniermittel sowohl gut als auch reproduzierbar einbringen zu können. So kann eine Spannung beim Aufwickeln der Faserhalbzeuge für die oberen Lagen unter Umständen geringer werden, um immer noch ein gutes Durchdringen mit Imprägniermittel zu ermöglichen.

Bei einer Ausgestaltung der Erfindung können die Faserhalbzeuge als ein einziges Faserbündel umlaufend auf den Aufnahmeträger aufgebracht werden, vorzugsweise als Roving bzw. Faserbündel mit mindestens 15.000 oder 20.000 Einzelfasern. Das Aufbringen erfolgt dabei mit der Breite von genau einem Faserbündel bzw. einem Roving, so dass vorzugsweise keine zwei Faserbündel oder Rovings nebeneinander sondern nur lagenweise aufeinander auf den Aufnahmeträger aufgebracht werden. Jede Lage wird also von genau einem Roving gebildet. Die Faserhalbzeuge als Faserbündel bzw. Roving sind vorteilhaft bandartig ausgebildet, wobei ihre Breite größer ist als ihre Dicke und insbesondere sind sie so breit wie der Aufnahmeträger. Bevorzugt ist die Breite um den Faktor 10 bis 100 größer als die Dicke, besonders bevorzugt um den Faktor 20 bis 40. Die Dicke kann bei 0,1mm bis 0,5mm liegen und die Breite bei 2mm bis 6mm oder bis 10mm. Der Aufnahmeträger bzw. ein Spulenkörper ist dann sehr schmal und weist insbesondere diese Breite von nur einem Faserbündel bzw. Roving auf. Die Breite des Spulenkörpers kann also vorzugsweise 2 mm bis 15 mm betragen.

Eine Durchlässigkeit des Aufnahmeträgers für das Imprägniermittel ist vorteilhaft flächig bzw. für den größten Teil des Aufnahmeträgers bzw. des vorgenannten Spulenkörpers vorgesehen. Besonders vorteilhaft sind sämtliche Bereiche des Aufnahmeträgers, auf denen Faserhalbzeuge aufliegen, durchlässig ausgebildet, so dass eine gute und vollständige Durchdringung der Faserhalbzeuge mit dem Imprägniermittel möglich ist. Für die Durchlässigkeit kann vorteilhaft eine Anzahl von Löchern, Ausnehmungen, Durchbrechungen odgl. vorgesehen sein. Diese sind besonders vorteilhaft regelmäßig angeordnet bzw. gleich verteilt über die Fläche des Aufnahmeträgers für eine gleichmäßige Durchlässigkeit pro Fläche. Sie können aber auch in bestimmten Bereichen, insbesondere zu den seitlichen Begrenzungen hin, weniger sein oder kleiner, also eine geringere Durchlässigkeit pro Flächeneinheit bewirken.

Besonders vorteilhaft kann so ein Aufnahmeträger nach Art eines Siebes oder Lochrasters ausgebildete Bereiche aufweisen, die zwar einerseits zum Aufwickeln oder Auflegen der Faserhalbzeuge ausgebildet sind und diese entsprechend stützen, andererseits aber eben durchlässig sind für das Imprägniermittel. Die Größe der vorgenannten Löcher, Ausnehmungen oder Durchbrechungen ist vorteilhaft gering, beispielsweise im Bereich von 0,1mm x 0,1mm bis 1mm x 1mm oder sogar 5mm x 5mm. Es können auch im Wesentlichen in Längsrichtung des Aufnahmeträgers verlaufende Stäbe oder Stege sein, die von quer verlaufenden Rippen oder Trägern gehalten werden.

Es ist möglich, zur besseren Verteilung des Imprägniermittels in die Faserhalbzeuge, im Weg des Imprägniermittels vor den Faserhalbzeugen eine Art flächige Fließhilfe oder Verteilhilfe vorzusehen. Diese ist vorteilhaft als eine Art grobmaschiges Gewirke oder Gewebe ausgebildet, mit einer Maschenweite im Größenbereich der vorgenannten Löcher. Dadurch kann das Imprägniermittel sozusagen eine gute Querverteilung bzw. flächige Verteilung erfahren bevor es in die Faserhalbzeuge eindringt. Entweder kann diese Fließhilfe oder Verteilhilfe zuerst auf einen vorbeschriebenen Aufnahmeträger aufgebracht bzw. aufgewickelt werden, beispielsweise in 1 bis 4 Lagen, und dann die Faserhalbzeuge direkt darauf, wenn das Imprägniermittel durch den Aufnahmeträger hindurch in die Faserhalbzeuge eingebracht wird. Oder es werden zuerst die Faserhalbzeuge auf den Aufnahmeträger aufgebracht und dann darauf die Verteilhilfe oder beides zusammen. Das heißt es kann auch zweckmäßig sein, die Verteilhilfe zuerst auf den Aufnahmeträger aufzubringen, darauf das Faserhalbzeugpaket zu platzieren und abschließend wieder eine Verteilhilfe zu verwenden.

Vorteilhaft ist der Aufnahmeträger im Inneren im Wesentlichen hohl und weist dort einen Innenraum auf, insbesondere ist es ein zuvor genannter Spulenkörper zum Aufwickeln der Faserhalbzeuge. Dieser Innenraum ist also von durchlässigen Wandungen des Aufnahmeträgers bzw. Spulenkörpers umgeben und wird durch diese gebildet. Der Innenraum kann dabei kanalartig ausgebildet sein und einen Durchmesser von einigen Millimetern bis einigen Zentimetern aufweisen. Es ist wichtig, dass der Querschnitt groß genug ist, um eine ausreichende Menge an Imprägniermittel in der gewünschten Zeit hindurchzubringen. Des Weiteren wird dadurch natürlich der anfängliche Wickelradius für die Faserhalbzeuge mitbestimmt.

In nochmals weiterer Ausgestaltung der Erfindung kann vorgesehen sein, dass der Aufnahmeträger bzw. ein Spulenkörper eine über seine für das Imprägniermittel durchlässige Oberfläche bzw. Wandung hinweg verteilte und bereichsweise unterschiedliche Durchlässigkeit für das Imprägniermittel aufweist. So kann in den Aufnahmeträger hinein oder an ihn heran das Imprägniermittel mit überall gleichem Druck herangebracht werden, strömt dann aber in unterschiedlicher Menge durch ihn hindurch. Dies kann unter Umständen nützlich sein für eine letztlich gewollte Verteilung der Imprägnierung der Faserhalbzeuge. Alternativ kann die Durchlässigkeit auch überall gleich sein, was die Herstellung des Aufnahmeträgers vereinfacht.

In vorteilhafter Ausgestaltung der Erfindung wird das Durchdringen der auf den Aufnahmeträger aufgebrachten Faserhalbzeuge mit Imprägniermittel durchgeführt und unterstützt, wofür es mehrere Möglichkeiten gibt. Aufgrund der üblicherweise gegebenen Viskosität der verwendeten Imprägniermittel, insbesondere Harze, sowie einer praxistauglichen Wickeldichte der Faserhalbzeuge auf den Aufnahmeträger reicht ein selbsttätiges Durchdringen, beispielsweise wie beim Eintauchen, also im Wesentlichen auch durch Kapillareffekte, nicht aus. Möglich ist ein Beaufschlagen mit einer durch eine Drehung oder schnelle Bewegung des Aufnahmeträgers verursachten Kraft bzw. Zentrifugalkraft. Ein Aspekt der Erfindung ist es, das Imprägniermittel mit Überdruck bzw. mit hohem Druck zu beaufschlagen, vorzugsweise 1,2 Bar bis 5 Bar oder sogar 20 Bar, an den Aufnahmeträger oder in ihn hinein heranzuführen zum Imprägnieren der Faserhalbzeuge. Ein nochmals weiterer Aspekt der Erfindung ist das Anlegen eines Unterdrucks von außen, also von der Seite an die Lagen der Faserhalbzeuge, an der das Imprägniermittel auch wieder entfernt werden kann. Ein solcher Unterdruck kann 0,9 Bar bis 0,1 Bar betragen, unter Umständen sogar bis 0,01 Bar. Vorteilhaft ist es möglich, mehrere dieser Möglichkeiten zu kombinieren, insbesondere die Kombination von Überdruck und Unterdruck.

Um aus den Lagen von Faserhalbzeugen austretendes Imprägniermittel zur Vermeidung von Verschmutzungen aufzufangen, ist erfindungsgemäß eine schlauch- bzw. beutelartige oder gehäuseartige Umhüllung oder ein entsprechender Behälter vorgesehen, in dem sich der Aufnahmeträger mit den Faserhalbzeugen beim Imprägnieren befindet. Eine Zuleitung für das Imprägniermittel führt hinein und eine Ableitung führt heraus. Bei der Ableitung wird direkt der vorgenannte Unterdruck angelegt für dadurch aus den Faserhalbzeugen entferntes überschüssiges Imprägniermittel. Erfindungsgemäß ist die Umhüllung flexibel bzw. plastisch verformbar und luftundurchlässig, bevorzugt in etwa schlauchartig, so dass sie zum Einen das Anlegen eines Unterdrucks unterstützt und zum Anderen sich dadurch sehr gut an die Außenseiten der Lagen von Faserhalbzeugen anlegt. Dadurch kann eine Presswirkung erreicht werden, die das Entfernen von Imprägniermittel aus den komplett durchtränkten Faserhalbzeugen begünstigt. Die Umhüllung kann, beispielsweise als günstiges dünnes Rohr oder Schlauch, zur einmaligen Verwendung ausgebildet sein, sodass sie auch nicht gereinigt werden muss.

Ein Absaugen von überschüssigem bzw. überflüssigem Imprägniermittel kann einerseits auf demselben Weg erfolgen wie das Einbringen, also beispielsweise von innen bei einem zylindrischen hohlen Aufnahmeträger. Vorteilhaft kann es an der Außenseite erfolgen, so dass Imprägnieren und Absaugen schneller bzw. in einem Vorgang durchgeführt werden kann.

Der Aufnahmeträger mit Faserhalbzeugen und einer vorgenannten Umhüllung kann zusätzlich noch in einen Behälter eingebracht werden für den Vorgang. So kann Prozesskontrolle und Sauberkeit beim Arbeiten verbessert werden.

Bei einem umlaufenden Aufbringen der Faserhalbzeuge auf den Aufnahmeträger kann in Ausgestaltung der Erfindung ein Trennmittel auf eine Seitenfläche des Faserbündels bzw. des Rovings aufgebracht werden, insbesondere an eine zum Aufnahmeträger hin gewandte Unterseite des Faserbündels bzw. Rovings. So befindet sich zwischen zwei Lagen des Faserbündels bzw. Rovings immer das Trennmittel. Das Trennmittel kann aus der Gruppe gewebeartig, körnig oder pulverig ausgewählt werden, wobei es vorteilhaft durchlässig für das Harz oder das Imprägniermittel ist. Beim anschließenden Abwickeln der imprägnierten Faserbündel bzw. Rovings wird ein gewebeartiges Trennmittel in Form eines Trenngewebes gleichzeitig von diesem abgezogen und an einer separaten Aufnahme gesammelt bzw. aufgespult. Ein körniges oder pulveriges Trennmittel kann entweder herabfallen oder in dem Faserverbundteil verbleiben.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in Zwischen-Überschriften und einzelne Abschnitte beschränkt die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: einen spulenartigen Aufnahmeträger von der Seite mit einem gelochten Spulenkörper,
- Fig. 2: eine Schrägansicht des Aufnahmeträgers aus Fig. 1 mit Blick in einen Innenkanal des Aufnahmeträgers,
- Fig. 3A: das Aufwickeln eines endlosen Faserhalbzeugs auf den Aufnahmeträger aus Fig. 1,
- Fig. 3B: das Aufwickeln eines endlosen Faserhalbzeugs auf einen alternativen sehr flachen Aufnahmeträger,
- Fig. 4: in drei Schritten das Imprägnieren eines mit Faserhalbzeug bewickelten Aufnahmeträgers durch Einbringen von Imprägniermittel in den Innenkanal und anschließendes Abnehmen von überschüssigem Imprägniermittel,
- Fig. 5: das Abwickeln des imprägnierten Faserhalbzeugs von dem Aufnahmeträger nach Fig. 4 bei einem Verarbeitungsschritt der imprägnierten Faserhalbzeuge,
- Fig. 6: eine erste konkrete Ausgestaltung einer Möglichkeit zum Imprägnieren eines mit Faserhalbzeug bewickelten Aufnahmeträgers mit Einbringen in einen verschließbaren Behälter,
- Fig.7: das Imprägnieren mit dem geschlossenen Behälter aus Fig. 6 in einer Anlage mit Zuführen und Abführen von Imprägniermittel,
- Fig. 8: eine abgewandelte Vorrichtung zum Imprägnieren mehrerer Aufnahmeträger mit Faserhalbzeugen in einem Behälter,
- Fig. 9: in mehreren Schritten das Imprägnieren eines Aufnahmeträgers mit Faserhalbzeugen darauf in einer flexiblen, schlauchartigen Umhüllung mit gleichzeitigem Einbringen und Absaugen von Imprägniermittel samt Anlegen von Unterdruck an die Umhüllung,
- Fig. 10: in mehreren Schritten das nicht von der Erfindung umfasste Imprägnieren eines flach ausgebildeten Aufnahmeträgers mit einer Lage von Faserhalbzeug als beliebiger Zuschnitt darauf in einem Druckbehälter mit Behälterdeckel und
- Fig. 11: die Fortsetzung des Verfahrens aus Fig. 10 mit dem Zuschnitt als im Wesentlichen flaches Gelege und anschließendes Bringen in ein Umformwerkzeug.

### Detaillierte Beschreibung der Ausführungsbeispiele

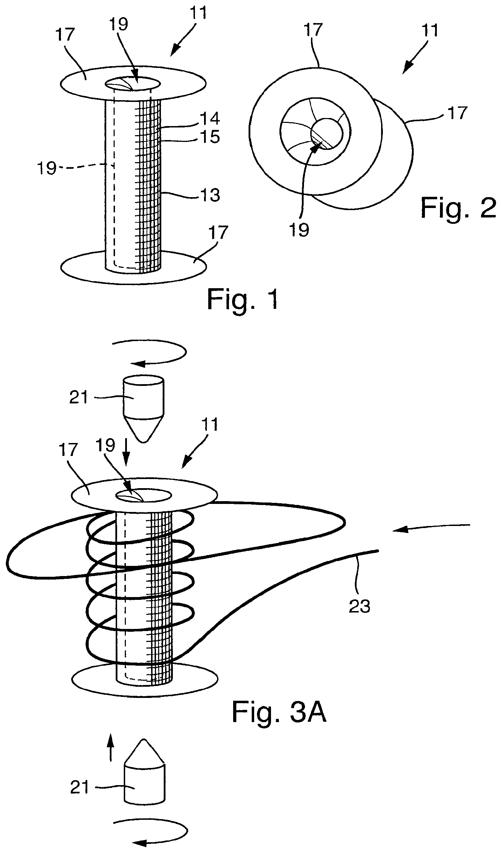

In der Fig. 1 ist ein Aufnahmeträger 11 gemäß der erfindungsgemäßen Vorrichtung dargestellt, der teilweise auf bekannte Art und Weise ausgebildet ist. Der Aufnahmeträger 11 weist einen Spulenkörper 13 auf, der hier länglich und rundzylindrisch ausgebildet ist. An den Enden des Spulenkörpers 13 sind Begrenzungsscheiben 17 vorgesehen, die ein seitliches Abrutschen der aufgebrachten Faserhalbzeuge verhindern und eine bessere Handhabbarkeit des Aufnahmeträgers 11 bewirken. In dem Aufnahmeträger 11 bzw. vor allem im Spulenkörper 13 ist ein zumindest von einer Seite her offener Innenkanal 19 vorgesehen, dessen Öffnung in der oberen Begrenzungsscheibe 17 zu sehen ist. Sein Verlauf innerhalb des Spulenkörpers 13 ist gestrichelt dargestellt. Der Innenkanal 19 kann auch an der anderen Seite bzw. der anderen Begrenzungsscheibe 17 offen sein, alternativ geschlossen. Der Aufnahmeträger 11 ist etwa 20cm bis 25cm lang, sein Durchmesser kann 3mm bis 2cm betragen. Dies ist aber nur ein Beispiel, er könnte auch größer oder deutlich kleiner sein. Die Schrägdarstellung der Fig. 2 zeigt den Aufnahmeträger 11 aus Fig. 1 in stärker gekippter Stellung und ermöglicht so einen Blick in den Innenkanal 19 hinein.

Der Spulenkörper 13 selbst ist, wie eingangs erläutert, durchlässig bzw. nicht geschlossen ausgebildet. Er weist eine Vielzahl von Löchern 14 mit Stegen 15 auf und ist somit gitterartig oder siebartig ausgebildet. Hier dargestellt ist eine Art Kreuzgitter. Weitere Möglichkeiten sind jedoch mehrere Löcher oder Bohrungen in einem an sich geschlossenen Spulenkörper, Längs- oder Radialschlitze oder auch nur einige wenige Löcher, wobei sich für ein gleichmäßiges Einbringen von Imprägniermittel eine größere Anzahl von Löchern verteilt über die Fläche des Spulenkörpers 13 anbietet.

In der Fig. 3A ist dargestellt, wie auf den Aufnahmeträger 11, in dessen Enden bzw. an den Begrenzungsscheiben 17 und ein Stück in die Innenkanäle 19 hinein Halter 21 eingefahren werden, durch Drehen auf bekannte Art und Weise ein endloses Faserhalbzeug 23 aufgewickelt wird. Dies kann vor allem erfolgen wie im Stand der Technik bekannt.

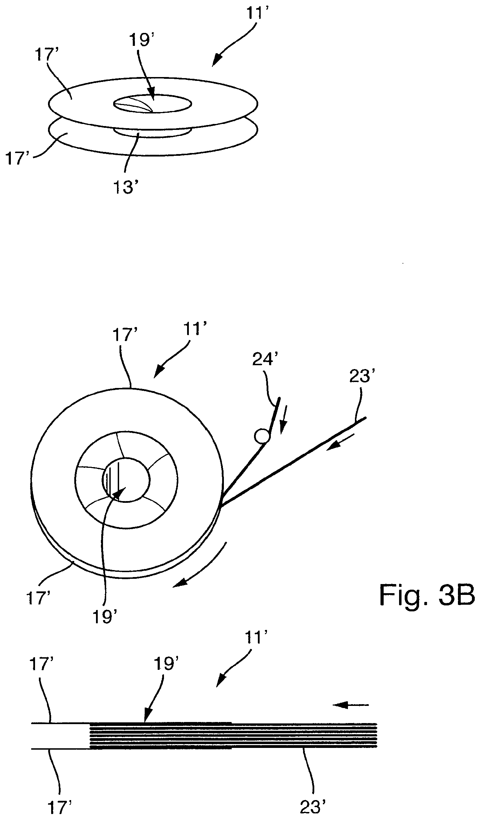

In der Fig. 3B ist dargestellt, wie ein alternativer Aufnahmeträger 11' ausgebildet sein könnte und wie darauf ein Faserhalbzeug 23' aufgewickelt wird. Der sehr flache bzw. schmale Aufnahmeträger 11' besteht aus zwei Begrenzungsscheiben 17' und einem Spulenkörper 13' mit einem Innenkanal 19' darin. Der Spulenkörper ist sehr kurz bzw. sehr schmal, beispielsweise 2mm bis 10mm breit. Daraus resultiert ein entsprechender sehr enger bzw. schmaler Raum zwischen den Begrenzungsscheiben 17'. In der Mitte und unten ist dargestellt, wie ein einziges Faserbündel 23' als Faserhalbzeug umlaufend auf den Aufnahmeträger 11' aufgebracht wird, vorzugsweise hier als sogenannter Roving. Dieses Faserbündel 23' bzw. dieser Roving ist deutlich breiter als dick, beispielsweise 0,2mm dick und 6mm breit. Er kann aus über 15.000 einzelnen Fasern bestehen, beispielsweise 24.000 als sogenannter 24k-Roving. Das Faserbündel ist genauso breit wie der Raum zwischen den Begrenzungsscheiben 17' bzw. deren Abstand. Somit werden beim Aufwickeln keine Faserhalbzeuge bzw. Windungen oder Wicklungen nebeneinander gelegt, sondern nur lagenweise aufeinander. Das ist unten in Fig. 3B gut zu erkennen. Das Imprägnieren mit Imprägniermittel kann dann erfolgen wie sonst auch beschrieben, vorteilhaft von innen. Die geringe Breite bringt hier keinen Unterschied oder Nachteil.

Derartige Aufnahmeträger 11' können dann mit imprägnierten Rovings darauf in größerer Anzahl, beispielsweise mehr als zehn oder zwanzig, nebeneinander an einem Legekopf angeordnet sein. Dabei wird parallel von ihnen allen der jeweilige Roving abgewickelt zur Herstellung eines Faserverbundteils. Die direkt nebeneinander abgewickelten Rovings bilden dann gemeinsam eine breite Fläche oder ein sehr breites Band, das weitgehend oder ganz geschlossen ist. Dazu können sie unter Umständen durch Umlenkmittel seitlich noch enger zusammengeführt werden. Alternativ können die Rovings im abgewickelten Zustand eine Breite aufweisen, die über derjenigen des Platzes auf dem Aufnahmeträger 11' liegt, so dass sie sich nach dem Abwickeln etwas verbreitern und automatisch zusammenrücken.

Es ist auch dargestellt, wie ein Trennmittel in Form eines Trenngewebes 24' als langes schmales Band, in etwa so breit wie der Abstand zwischen den Begrenzungsscheiben 17', zeitgleich mit dem Faserbündel 23' auf den Aufnahmeträger 11' aufgebracht wird. Dies erfolgt über eine Umlenkrolle an oder auf die Rückseite des Faserbündels 23', und somit ist immer zwischen zwei Lagen des Faserbündels 23' das Trennmittel vorhanden. Das Trennmittel könnte neben gewebeartig auch pulverförmig oder flüssig ausgebildet sein. Es kann beispielsweise auch ein Harz-Granulat oder Recycling-Harz sein. Ein solches Trennmittel sollte natürlich gut von dem Imprägniermittel durchdringen werden können bzw. den Imprägniervorgang nicht behindern. Durch eine inhärente Durchlässigkeit des Trennmittels kann das Imprägnieren sogar noch verbessert werden. Zusätzlich kann das Trennmittel bei Harzen mit relativ hoher Viskosität zur Imprägnierung hilfreich sein und auch das Fixieren der noch nicht imprägnierten Fasern verbessern. Beim Abwickeln der Rovings kann dann ein gewebeartiges bzw. zusammenhängendes Trennmittel oder Trenngewebe auf einer eigenen Spule aufgewickelt und entfernt werden, so dass es nicht stört.

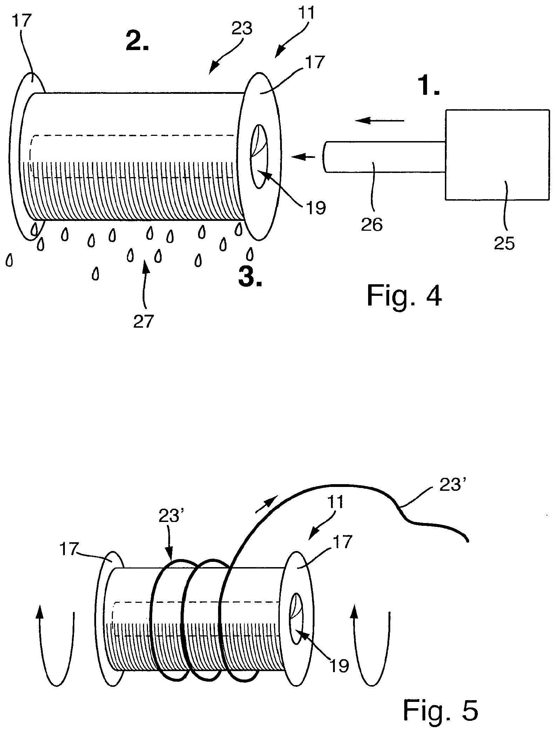

In Fig. 4 ist dargestellt, wie in mehreren Schritten das Imprägnieren bzw. Infiltrieren grundsätzlich erfolgt. Eine Imprägniervorrichtung 25 mit einem länglichen Rohr 26 wird in den Innenkanal 19 des Aufnahmeträgers 11 eingebracht in einem ersten Schritt bzw. der Aufnahmeträger 11 wird darauf aufgesteckt. Dabei schließt an der Außenseite der Innenkanal 19 mit der Imprägniervorrichtung 25 bzw. dem Rohr 26 dicht ab, auf der linken Seite ist er ebenfalls geschlossen oder aber mit einer weiteren Zuführung für Imprägniermittel versehen. In einem zweiten Schritt wird Imprägniermittel, beispielsweise ein eingangs genanntes Harz, in den Innenkanal 19 mit Druck eingebracht und kann den durchlässigen Spulenkörper 13 durchdringen und so in die verschiedenen Lagen von Faserhalbzeug 23 eindringen. Das Imprägniermittel wird dabei vorteilhaft mit Druck beaufschlagt, wie eingangs erläutert, beispielsweise mehreren Bar Überdruck. Von außen kann ein Unterdruck angelegt werden, wie ebenfalls eingangs erläutert worden ist. Das Faserhalbzeug 23 wird dann langsam von innen nach außen mit dem Imprägniermittel durchdrungen bzw. eben imprägniert. Ob es dabei in einzelnen, gut unterscheidbaren Lagen vorliegt oder nicht, spielt hierfür keine wesentliche Rolle. Die Viskosität des Imprägniermittels sowie die Spannung, mit der das Faserhalbzeug auf den Aufnahmeträger 11 aufgewickelt worden ist, sind im Einzelfall genau abzustimmen, so dass eine vollständige Durchdringung mit dem Imprägniermittel gewährleistet ist. Diese Spannung kann beim Aufwickeln gemäß Fig. 3 auch variiert werden, insbesondere zunehmen oder abnehmen, um eben ein gleichmäßiges Durchdringen zu ermöglichen.

Ist nach dem zweiten Schritt der Aufnahmeträger 11 mit Faserhalbzeug 23 bzw. der von dem aufgewickelten Faserhalbzeug gebildeten Faserhalbzeugpaket voll durchdrungen bzw. damit getränkt und somit imprägniert, kann gemäß einem dritten Schritt überschüssiges Imprägniermittel, dargestellt durch die Tropfen 27, entfernt werden. Möglichkeiten hierzu sind zuvor bereits genannt worden und werden nachher im Detail noch erläutert.

Als Ergebnis liegt ein Aufnahmeträger 11 vor mit einem Faserhalbzeugpaket bzw. einem aufgewickelten Faserhalbzeug 23, das mit relativ geringem Aufwand aufgewickelt und auf gewünschte Art und Weise mit einem bestimmten Grad mit Imprägniermittel imprägniert worden ist. Während die Schritte 1 bis 3 der Fig. 4 natürlich aufeinanderfolgend bzw. innerhalb relativ kurzer Zeit erfolgen, kann zwischen dem Aufwickeln des Faserhalbzeugs 23 auf den Aufnahmeträger 11 gemäß Fig. 3 und dem Imprägnieren gemäß Fig. 4 eine beliebig lange Zeit liegen, wie eingangs erläutert worden ist.

In Abwandlung der Erfindung kann die vorbeschriebene Reihenfolge bzw. Richtung des Imprägniermittels beim Imprägnieren auch umgedreht werden. Es kann also von innen nach außen mit einem Druckunterschied eingebracht werden.

Der fertig imprägnierte Aufnahmeträger 11 mit imprägniertem Faserhalbzeug 23' darauf kann dann gemäß Fig. 5 in einem nicht näher dargestellten Verarbeitungsschritt abgewickelt bzw. verwendet werden. Das abgewickelte Faserhalbzeug 23' weist dann einen der Verwendung angepassten Grad bzw. eine entsprechende Menge an Imprägniermittel 27 darauf auf.

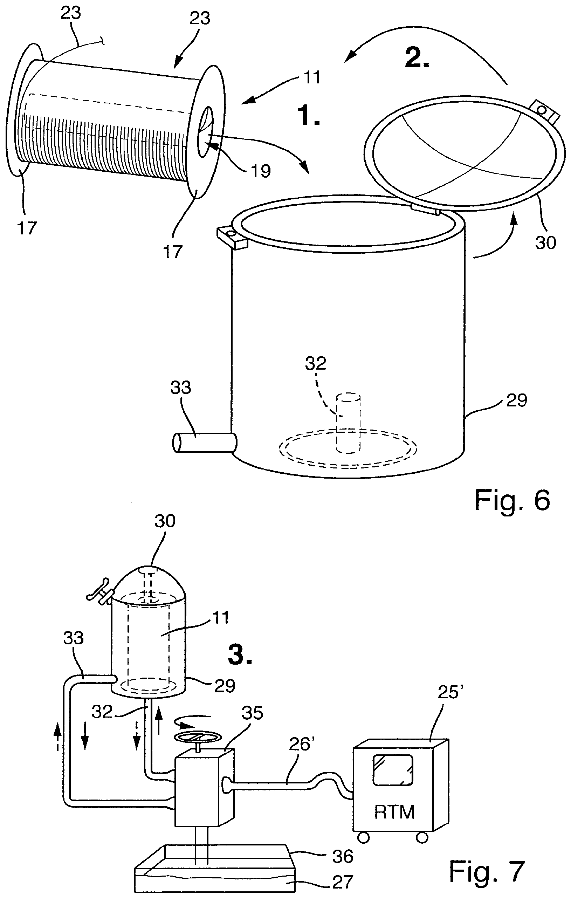

In den Fig. 6 und 7 ist konkret eine Möglichkeit zur praxistauglichen Imprägnierung eines bewickelten Aufnahmeträgers 11 dargestellt. Ein solcher Aufnahmeträger 11 mit Faserhalbzeug 23 darauf wird in einem ersten Schritt in einen Behälter 29 eingebracht, der etwas größer ist als der Aufnahmeträger 11, beispielsweise 10% bis 30% höher, und einen 20% bis 100% größeren Durchmesser aufweist. Der Behälter 29 ist mit einem verschließbaren Deckel 30 versehen sowie einem auch als Halterung dienenden Zulauf 32 an dem Boden und einem seitlichen Ablauf 33. Der Aufnahmeträger 11 wird mit dem Spulenkörper 13 bzw. dessen Innenkanal 19 auf den Zulauf 32 aufgesetzt. Eine Verbindung zwischen unterer Begrenzungsscheibe 17 bzw. unterem Ende des Innenkanals 19 und dem Zulauf 32 sollte abgedichtet sein. Am anderen Ende sollte der Innenkanal 19 ebenfalls abgedichtet sein oder aber die Begrenzungsscheibe 17 geschlossen ausgeführt sein. Dann wird im zweiten Schritt der Deckel 30 verschlossen.

In der Fig. 7 ist der dritte Schritt dargestellt, bei dem nämlich von einer Imprägniervorrichtung 25' über eine entsprechende Zuleitung 26' über einen Verteiler 35 einerseits Imprägniermittel mit entsprechendem Druck an den Zulauf 32 gegeben wird. Dieses Imprägniermittel strömt über den Zulauf 32 in den Innenkanal 19 und durchdringt dabei die Faserpackung auf dem Aufnahmeträger 11 bzw. die Lagen der Faserhalbzeuge. An der Seite tritt überschüssiges bzw. aus den Faserhalbzeugen ausgetretenes Imprägniermittel aus und kann am Ablauf 33 abgenommen werden. Vorteilhaft erfolgt dies über Anlegen eines Unterdrucks, wodurch sowohl das sich im Behälter 29 sammelnde Imprägniermittel abgesaugt werden kann als auch das Durchdringen der Faserhalbzeuge mit dem Imprägniermittel unterstützt wird. Der Ablauf 33 wiederum führt zu dem Verteiler 35 zurück. Der Verteiler 35 ist auch mit einem Vorratsbehälter 36 für Imprägniermittel 27 verbunden, aus dem er sowohl für den Zulauf 32 Imprägniermittel entnimmt als auch Imprägniermittel vom Ablauf 33 wieder zurückführt.

Mit gestrichelten Verlaufspfeilen ist der Weg mit der umgekehrten Richtung des Imprägniermittels dargestellt, bei dem das Imprägniermittel von außen auf die Faserhalbzeuge aufgebracht wird. Durch einen entsprechenden Druckunterschied geht es dann durch die Faserhalbzeuge hindurch in den Innenkanal 19 des Aufnahmeträgers 11, von wo aus es an der Leitung 32 abgesaugt werden kann.

Gesteuert werden kann das Verfahren entweder rein zeitlich aufgrund von Erfahrungswerten, wenn also nach einer bestimmten Zeit eine gewünschte und vorgesehene Durchdringung der Faserhalbzeuge mit Imprägniermittel erreicht ist. Alternativ wäre eine Messung der Menge an Imprägniermittel im Aufnahmeträger 11 bzw. in den Faserhalbzeugen 23 möglich, beispielsweise durch Gewichtsmessung oder durch Differenzmengenmessung zwischen Zulauf 32 und Ablauf 33.

Innerhalb des Behälters 29 kann der Aufnahmeträger 11 während des Imprägnierens gedreht werden, unter Umständen auch sehr schnell, so dass durch die dadurch entstehende Zentrifugalkraft das Imprägniermittel zusätzlich unterstützt wird beim Durchdringen der Faserhalbzeuge von innen nach außen.

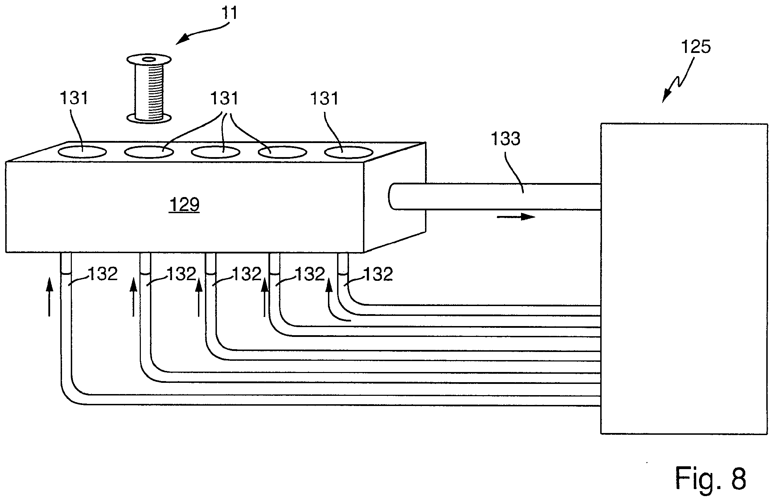

In der Fig. 8 ist eine weitere Variante einer Imprägniervorrichtung 125 dargestellt. Ein Behälter 129 weist hier fünf Aufnahmen 131 auf, in den also fünf Aufnahmeträger 11 mit Faserhalbzeugen darauf eingebracht werden können. In den Behälter 129 führen fünf Zuläufe 132, wobei nur ein einziger Ablauf 133 vorgesehen ist. Dieses Mengenverhältnis kann auch anders sein, unter Umständen sogar umgedreht. Die einzelnen Aufnahmen 131 sind im Wesentlichen entsprechend dem Behälter 29 gemäß der Fig. 6 und 7 ausgebildet, es ist also noch ein Deckel zum dichten Verschließen vorgesehen. So können mehrere Aufnahmeträger mit Faserhalbzeugen darauf gleichzeitig imprägniert werden. Der rechte Teil der Imprägniervorrichtung 125 der Fig. 8 weist die Baueinheiten 25', 26', 35 und 36 der Fig. 7 auf und ist hier sehr schematisch dargestellt zur Veranschaulichung des mehrfachen Imprägnierens zur gleichen Zeit.

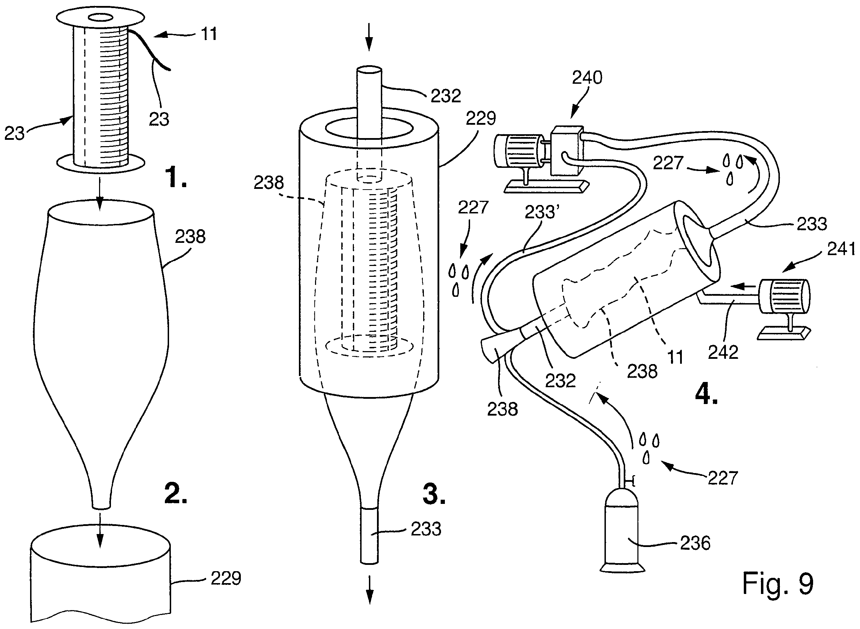

In der Fig. 9 ist in mehreren Schritten ein alternatives Verfahren zum Imprägnieren eines Aufnahmeträgers 11 mit Faserhalbzeug 23 darauf dargestellt. Hier wird in einem ersten Schritt der bewickelte Aufnahmeträger 11 in einen plastisch verformbaren Schlauch 238 eingebracht, der an beiden Enden offen ist. Der Schlauch 238 wiederum wird in einem zweiten Schritt in einen Behälter 229 eingebracht, der starr ausgebildet ist und auch dicht verschlossen werden kann. Er kann aus Gummi oder Kautschuk bestehen, evtl. auch aus Silikon, so dass er auch gut reinigbar ist.

In einem dritten Schritt wird ein Zulauf 232 in den Behälter 229, den Schlauch 238 und den Aufnahmeträger 11 bzw. dessen Innenkanal 19 hinein eingesteckt oder eingebracht. Er ist zumindest mit dem Schlauch 238 an dessen oberen Ende sowie vorteilhaft auch mit dem Behälter 229 an dessen oberen Ende dichtend verbunden bzw. abgeschlossen. Von unten wird ein Ablauf 233 eingesteckt, und zwar nur in den Schlauch 238. Dabei ragt der Schlauch 238 mit seinem unteren Ende aus dem Behälter 229 heraus.

Im vierten Schritt gemäß Fig. 9 wird über den Zulauf 232 Imprägniermittel 227 aus einem Vorratsbehälter 236, der hier selbst unter Druck steht, in den Innenkanal 19 des Aufnahmeträgers 11 eingebracht und durchdringt das darauf aufgewickelte Faserhalbzeug auf bekannte Art und Weise von innen nach außen. An den Schlauch 238 wird über den Ablauf 233 ein Unterdruck von einer Pumpe 240 angelegt. Durch diesen Unterdruck wird das Durchdringen der Faserhalbzeuge mit dem Imprägniermittel 227 gefördert. Des Weiteren kann überschüssiges bzw. ausgetretenes Imprägniermittel am Ablauf 233 abgeführt werden und beispielsweise, auf nicht dargestellte Art und Weise, wieder für einen weiteren Imprägniervorgang verwendet werden.

In Erweiterung ist in der Fig. 9 zum vierten Schritt noch dargestellt, dass ein weiterer Ablauf 233' an das Ende des Schlauches 238 angeschlossen wird, an dem auch der Zulauf 232 hindurchgeht. Somit kann auch dieser Teil des Schlauches 238 aus dem Behälter 229 herausragen. Am Ablauf 233' liegt ebenfalls der von der Pumpe 240 angelegte Unterdruck an zum Absaugen von überschüssigem Imprägniermittel.

Ein weiterer Vorteil der Beaufschlagung des Schlauchs 238 mit Unterdruck durch die Pumpe 240 besteht darin, dass gleichzeitig eine gewisse Kraft von außen auf die Faserpackung bzw. die aufgewickelten Faserhalbzeuge wirkt, wodurch eine zu große Menge an Imprägniermittel im Faserhalbzeugpaket bzw. an den Faserhalbzeugen vermieden werden kann. Somit kann auch auf diese Art und Weise der Gehalt bzw. die Menge an Imprägniermittel eingestellt werden. Das mit Imprägniermittel imprägnierte Faserhalbzeug kann sozusagen wieder in gewünschtem Maß ausgequetscht werden.

Dieses Ausquetschen bzw. Ausdrücken kann unterstützt werden durch eine weitere Pumpe 241, die als Überdruckpumpe arbeitet und über eine Druckleitung 242 mit dem Behälter 229 verbunden ist. Sie kann den Behälter mit Überdruck beaufschlagen, beispielsweise einigen Bar, und zwar entweder mit Luft oder einem Fluid. Dadurch kann noch einmal ein auf die imprägnierten Faserhalbzeuge auf dem Aufnahmeträger 11 wirkender Druck zum Entfernen von überschüssigem Imprägniermittel stark erhöht werden.

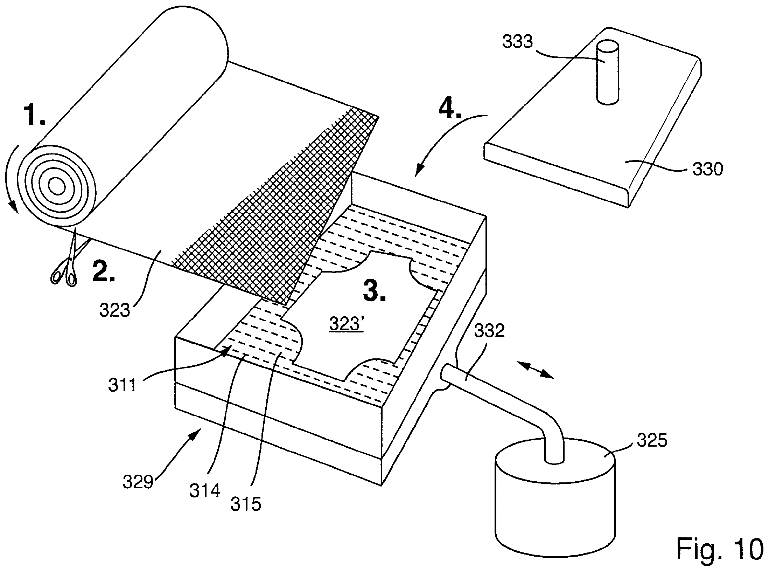

In der Fig. 10 ist in mehreren Schritten ein nicht von der Erfindung umfasstes alternatives Verfahren zum Imprägnieren bzw. Infiltrieren von Faserhalbzeug in Form eines Geleges 323, welches auch ein Gewebe, Geflecht, Gestick oder Gestrick sein kann, in einem Behälter 329 dargestellt. Unten in dem Behälter 329 ist als eine Art Aufnahmeträger 311 ein flacher Boden vorgesehen, der hier eben ausgebildet ist und der entsprechend dem Spulenkörper 13 aus Fig. 1 eine Vielzahl von Löchern 314 mit einer Vielzahl von Stegen 315 dazwischen aufweist. Auf den Aufnahmeträger 311 bzw. den Boden des Behälters 329 wird das in einem ersten Schritt abgewickelte Gelege 323', das in einem zweiten Schritt beliebig zugeschnitten sein kann, was jedoch nicht zwingend so sein muss, in einem dritten Schritt aufgelegt.

Anschließend wird in einem vierten Schritt ein Deckel 330 auf den Behälter 329 gesetzt bzw. in dessen Behälterwände, und zwar derart, dass der Deckel 330 mit seiner nicht dargestellten Unterseite auf dem eingebrachten Gelege 323' aufliegt. Diese Unterseite des Deckels 330 ist ähnlich ausgebildet wie der Aufnahmeträger 311, also mit Öffnungen und Stegen bzw. durchlässig für ein Imprägniermittel.

An dem Behälter 329 bzw. unterhalb seines mit Öffnungen 314 versehenen Bodens ist ein Zulauf 332 einer Imprägniervorrichtung 325 vorgesehen. Ähnlich ist oben am Deckel 330 ein Ablauf 333 vorgesehen samt hier nicht dargestellter Saug- oder Druckpumpe. Die Funktionen von Zulauf 332 und Ablauf 333 können auch vertauscht sein, wie durch die Pfeile veranschaulicht wird. Des Weiteren ist dies für den Fachmann auch anhand der Beschreibung zur Fig. 7 leicht nachvollziehbar.

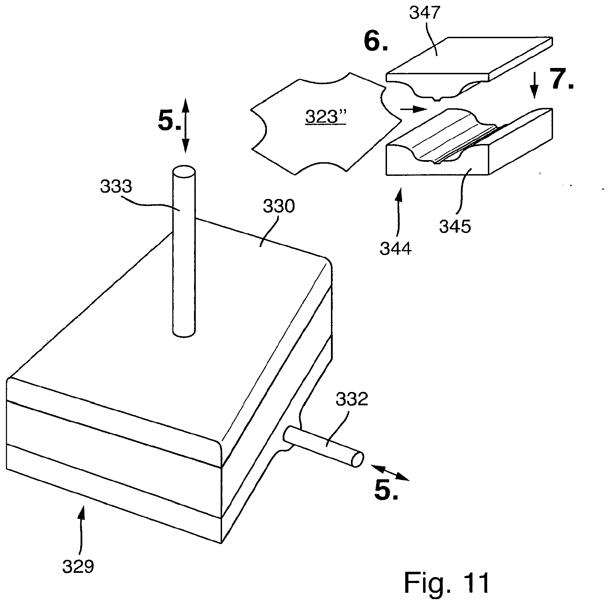

Mit der in der Fig. 10 dargestellten Anordnung kann also auch ein flaches Gelege 323' aus Faserhalbzeugen, welches dabei flach bleiben soll, schnell und einfach imprägniert werden. Dazu wird das zugeschnittene Gelege 323' zwischen Aufnahmeträger 311 und Deckel 330 gehalten bzw. mit gewissem Druck eingepresst und anschließend mit Druck ein Imprägniermittel hindurch gedrückt oder mit Unterdruck hindurch gesaugt, wie dies zuvor beschrieben worden ist und als fünfter Schritt in Fig. 11 dargestellt ist.

Des Weiteren ist rechts oben in Fig. 11 ein Umformwerkzeug 344 dargestellt mit unterer Hälfte 345 und oberer Hälfte 347. Untere Hälfte 345 und obere Hälfte 347 sind kongruent zueinander ausgebildet bzw. passen relativ genau ineinander. Darin wird in einem sechsten Schritt das imprägnierte bzw. infiltrierte Gelege 323" eingelegt und dann in einem siebten Schritt umgeformt und gehärtet.

## Patentansprüche

1. Verfahren zum Imprägnieren von Faserhalbzeugen (23, 23') in Form von langen bzw. endlosen Fasern oder Faserbündeln mit Imprägniermittel (27, 227), vorzugsweise flüssigem Imprägniermittel bzw. Harz, mit den Schritten:
- Aufwickeln der Faserhalbzeuge (23, 23') auf einen für das Imprägniermittel (27, 227) durchlässigen Aufnahmeträger (11, 11'), wobei die Faserhalbzeuge umlaufend auf den Aufnahmeträger aufgebracht werden und den Aufnahmeträger (11, 11') dabei zumindest bereichsweise umlaufend umgeben, wobei die Faserhalbzeuge (23, 23') in mehreren Lagen aufeinander und übereinander vorliegen, wobei untere Lagen nahe dem Aufnahmeträger (11, 11') liegen und obere Lagen weiter von dem Aufnahmeträger entfernt liegen,
- Einbringen des Imprägniermittels (27, 227) in die Faserhalbzeuge (23, 23'), wobei das Imprägniermittel dabei zuerst zumindest einmal durch den Aufnahmeträger (11, 11') hindurch geht und dann die unteren Lagen der Faserhalbzeuge (23, 23') und dann die oberen Lagen der Faserhalbzeuge durchdringt,
**dadurch gekennzeichnet, dass** das Durchdringen der auf den Aufnahmeträger (11, 11') aufgebrachten Faserhalbzeuge (23, 23') mit Imprägniermittel (27, 227) unterstützt wird durch mindestens einen der folgenden Schritte:
- Beaufschlagen des Imprägniermittels (27, 227) mit Überdruck,
- Anlegen eines Unterdrucks von außen.

2. Verfahren nach Anspruch 1, **dadurch gekennzeichnet, dass** die Faserhalbzeuge (23, 23') den Aufnahmeträger (11, 11') weitgehend bzw. vollständig umgeben.

3. Verfahren nach Anspruch 1 oder 2, **dadurch gekennzeichnet, dass** das Imprägniermittel (27, 227) durch die mit den Faserhalbzeugen (23, 23') belegten Bereiche hindurch in die Lagen der Faserhalbzeuge eingebracht wird, insbesondere von innen nach außen bzw. zuerst in die inneren unteren Lagen und dann in die äußeren oberen Lagen.

4. Verfahren nach einem der vorhergehenden Ansprüche, **dadurch gekennzeichnet, dass** die Faserhalbzeuge (23, 23') als ein einziges Faserbündel umlaufend auf den Aufnahmeträger aufgebracht werden, vorzugsweise als Roving, wobei insbesondere das Aufbringen mit nur der Breite von genau einem Faserbündel bzw. einem Roving erfolgt und vorzugsweise keine zwei Faserbündel oder Rovings nebeneinander sondern nur aufeinander auf den Aufnahmeträger (11, 11') aufgebracht werden.

5. Verfahren nach einem der vorhergehenden Ansprüche, **dadurch gekennzeichnet, dass** der Aufnahmeträger (11, 11') durchlässig für das Imprägniermittel (27, 227) ausgebildet ist, insbesondere eine Vielzahl von Löchern (14), Ausnehmungen oder Durchbrechungen odgl. aufweist, vorzugsweise in regelmäßiger Anordnung und insbesondere nach Art eines Siebes oder Lochrasters.

6. Verfahren nach einem der vorhergehenden Ansprüche, **gekennzeichnet durch** Beaufschlagen mit einer durch eine Drehung des Aufnahmeträgers (11, 11') verursachten Zentrifugalkraft.

7. Verfahren nach einem der vorhergehenden Ansprüche, **dadurch gekennzeichnet, dass** zum Durchdringen mit dem Imprägniermittel (27, 227) eine schlauchartige Umhüllung (238) aus flexiblem, luftundurchlässigem Material über den Aufnahmeträger (11, 11') gebracht wird und einerseits eine Zuleitung (232) für das Imprägniermittel (27, 227) in die Umhüllung (238) hinein führt, insbesondere in das Innere des Aufnahmeträgers (11, 11'), und andererseits eine Ableitung (233) für abzusaugendes überschüssiges Imprägniermittel (27, 227) aus der Umhüllung (238) heraus führt, die an eine Unterdruckeinrichtung bzw. eine Unterdruckpumpe (240) geführt ist.

8. Verfahren nach einem der vorhergehenden Ansprüche, **dadurch gekennzeichnet, dass** es mit Einbringen des Imprägniermittels (27, 227) von innen mit Überdruck und/oder mit Absaugen des Imprägniermittels von der Außenfläche der Faserhalbzeuge (23, 23') mittels Unterdruck durchgeführt wird.

9. Vorrichtung zum Imprägnieren von Faserhalbzeugen (23, 23') gemäß einem Verfahren nach einem der vorhergehenden Ansprüche, wobei ein Aufnahmeträger (11, 11') für die Faserhalbzeuge (23, 23') flüssigkeitsdurchlässig ausgebildet ist, **dadurch gekennzeichnet, dass** eine schlauchartige Umhüllung (238) aus flexiblem, luftundurchlässigem Material vorgesehen ist, die einerseits eine Zuleitung (232) für das Imprägniermittel (27, 227) in die Umhüllung (238) hinein aufweist, insbesondere in das Innere des Aufnahmeträgers (11, 11'), und andererseits eine Ableitung (233) für abzusaugendes überschüssiges Imprägniermittel (27, 227) aus der Umhüllung (238) heraus aufweist, die an eine Unterdruckeinrichtung bzw. eine Unterdruckpumpe (240) geführt ist.

10. Vorrichtung nach Anspruch 9, **dadurch gekennzeichnet, dass** der Aufnahmeträger (11, 11') eine Vielzahl von Löchern (14), Ausnehmungen oder Durchbrechungen odgl. aufweist, vorzugsweise in regelmäßiger Anordnung und insbesondere nach Art eines Siebes oder Lochrasters.

11. Vorrichtung nach Anspruch 9 oder 10, **dadurch gekennzeichnet, dass** der Aufnahmeträger (11, 11') eine über seine für das Imprägniermittel (27, 227) durchlässige Oberfläche bzw. Wandung hinweg verteilte bereichsweise unterschiedliche Durchlässigkeit für das Imprägniermittel aufweist.

12. Vorrichtung nach einem der Ansprüche 9 bis 11, **dadurch gekennzeichnet, dass** der Aufnahmeträger (11, 11') im Inneren im Wesentlichen hohl ist und einen Innenraum (19, 19') aufweist, der von durchlässigen Wandungen des Aufnahmeträgers (11, 11') umgeben ist, wobei vorzugsweise der Innenraum (19, 19') kanalartig ausgebildet ist.

13. Vorrichtung nach einem der Ansprüche 9 bis 12, **dadurch gekennzeichnet, dass** der Aufnahmeträger (11, 11') einen zylindrischen und/oder runden bzw. angenähert runden Spulenkörper (13, 13') aufweist und seitlich über den Spulenkörper überstehende Begrenzungen (17, 17') aufweist, wobei vorzugsweise der Spulenkörper (13, 13') sehr schmal ist und insbesondere die Breite von nur einem Faserbündel bzw. Roving aufweist, wobei vorzugsweise die Breite des Spulenkörpers (13, 13') 2mm bis 15mm beträgt.

## Claims

1. Method for impregnating semi-finished fibrous products (23, 23') in the form of long or endless fibers or fiber bundles using an impregnating means (27, 227), preferably a liquid impregnating means and/or resin, the method comprising the steps:
- winding the semi-finished fibrous products (23, 23') onto a receiving carrier (11, 11') which is permeable to the impregnating means (27, 227), wherein the semi-finished fibrous products are applied onto the receiving carrier in an encircling manner and thereby at least regionally surround the receiving carrier (11, 11') in an encircling manner, wherein the semi-finished fibrous products (23, 23') are provided in a plurality of layers on top of and across one another, wherein lower layers lie so as to be close to the receiving carrier (11, 11') and upper layers lie so as to be more remote from the receiving carrier,
- introducing the impregnating means (27, 227) into the semi-finished fibrous products (23, 23'), wherein the impregnating means hereby passes through the receiving carrier (11, 11') at least once and then permeates the lower layers of the semi-finished fibrous products (23, 23') and then permeates the upper layers of the semi-finished fibrous products,
**characterized in that**
penetration of the semi-finished fibrous products (23, 23') which are applied onto the receiving carrier (11, 11') by impregnating means (27, 227) is supported by at least one of the following steps:
- applying a positive pressure to the impregnating means (27, 227),
- exposing to external negative pressure.

2. Method according to claim 1, **characterized in that** the semi-finished fibrous products (23, 23') surround the receiving carrier (11, 11') largely or completely.

3. Method according to claim 1 or 2, **characterized in that** the impregnating means (27, 227) is introduced into the layers of the semi-finished fibrous products so as to pass through the regions which are occupied by the semi-finished fibrous products (23, 23'), in particular from the inside to the outside, or first into the inside lower layers and then into the outside upper layers, respectively.

4. Method according to any of the preceding claims, **characterized in that** the semi-finished fibrous products (23, 23') are applied onto the receiving carrier in an encircling manner as a single fiber bundle, preferably as roving, wherein the application is in particular performed by way of the width of precisely only one fiber bundle or one roving, respectively, and preferably no two fiber bundles or rovings are applied onto the receiving carrier (11, 11') beside one another but only on top of one another.

5. Method according to any of the preceding claims, **characterized in that** the receiving carrier (11, 11') is configured so as to be permeable to the impregnating means (27, 227), in particular has a multiplicity of holes (14), clearances, or apertures, or similar, preferably in a regular arrangement and in particular in the manner of a sieve or a perforated pattern.

6. Method according to any of the preceding claims, **characterized by** applying a centrifugal force caused by rotation of the receiving carrier (11, 11').

7. Method according to any of the preceding claims, **characterized in that** for penetration of the impregnating means (27, 227) a tubular sheathing (238) of a flexible material, which is impermeable to air, is placed over the receiving carrier (11, 11') and a supply line (232) for the impregnating means (27, 227) is routed into the sheathing (238), in particular into the interior of the receiving carrier (11, 11'), on the one hand, and a discharge line (233), which is routed to a negative-pressure installation or a negative-pressure pump (240), respectively, for excess impregnating means (27, 227) which is to be suctioned is routed out of the sheathing (238), on the other hand.

8. Method according to any of the preceding claims, **characterized in that** said method is carried out by introducing the impregnating means (27, 227) from the inside by way of positive pressure and/or by suctioning the impregnating means from the external face of the semi-finished fibrous products (23, 23') by means of negative pressure.

9. Device for impregnating semi-finished fibrous products (23, 23') according to a method according to any of the preceding claims, wherein a receiving carrier (11, 11') for the semi-finished fibrous products (23, 23') is configured so as to be permeable to liquid, **characterized in that** a tubular sheathing (238) of a flexible material which is impermeable to air is provided, which has a supply line (232) for the impregnating means (27, 227) routed into the sheathing (238), in particular into the interior of the receiving carrier (11, 11'), on the one hand, and a discharge line (233), which is routed to a negative-pressure installation or a negative-pressure pump (240), respectively, for excess impregnating means (27, 227) which is to be suctioned is routed out of the sheathing (238), on the other hand.

10. Device according to claim 9, **characterized in that** the receiving carrier (11, 11') has a multiplicity of holes (14), clearances, or apertures, or similar, preferably in a regular arrangement and in particular in the manner of a sieve or a perforated pattern.

11. Device according to claim 9 or 10, **characterized in that** the receiving carrier (11, 11') has, across the surface or wall, respectively, thereof which is permeable to the impregnating means (27, 227), a permeability to the impregnating means which is regionally variable.

12. Device according to any of claims 9 to 11, **characterized in that** the receiving carrier (11, 11') is substantially hollow inside and has an interior space (19, 19') which is surrounded by permeable walls of the receiving carrier (11, 11'), wherein the interior space (19, 19') is preferably configured so as to be duct-like.

13. Device according to any of claims 9 to 12, **characterized in that** the receiving carrier (11, 11') has a cylindrical and/or round or almost round wound-package body (13, 13'), respectively, and delimitations (17, 17') which laterally project beyond the wound-package body, wherein preferably the wound-package body (13,13') is very narrow and in particular has the width of only one fiber bundle or roving, respectively, wherein the width of the wound-package body (13, 13') is preferably 2 mm to 15 mm.

## Revendications

1. Procédé destiné à imprégner des semi-produits fibreux (23, 23') sous forme de fibres ou de faisceaux de fibres longs ou sans fin avec un agent d'imprégnation (27, 227), de préférence un agent d'imprégnation fluide ou de la résine, comprenant les étapes suivantes :
- enroulement des semi-produits fibreux (23, 23') sur un support de réception (11, 11') perméable pour l'agent d'imprégnation (27, 227), les semi-produits fibreux étant appliqués circonférentiellement sur le support de réception et entourant le support de réception (11, 11') en l'occurrence au moins en partie sur sa périphérie, les semi-produits fibreux (23, 23') se présentant les uns sur les autres et les uns au-dessus des autres en plusieurs couches, les couches inférieures étant situées près du support de réception (11, 11') et les couches supérieures étant plus éloignées du support de réception,
- introduction de l'agent d'imprégnation (27, 227) dans les semi-produits fibreux (23, 23'), l'agent d'imprégnation passant en l'occurrence d'abord au moins une fois à travers le support de réception (11, 11') puis traversant les couches inférieures des semi-produits fibreux (23, 23') puis les couches supérieures des semi-produits fibreux,
**caractérisé en ce que** le passage à travers les semi-produits fibreux (23, 23') appliqués sur le support de réception (11, 11') par l'agent d'imprégnation (27, 227) est facilité par au moins l'une des étapes suivantes :
- sollicitation de l'agent d'imprégnation (27, 227) avec une surpression,
- application d'une dépression depuis l'extérieur.

2. Procédé selon la revendication 1, **caractérisé en ce que** les semi-produits fibreux (23, 23') entourent en grande partie ou complètement le support de réception (11, 11').

3. Procédé selon la revendication 1 ou 2, **caractérisé en ce que** l'agent d'imprégnation (27, 227) est introduit à travers les régions occupées par les semi-produits fibreux (23, 23') dans les couches des semi-produits fibreux, en particulier depuis l'intérieur vers l'extérieur ou d'abord dans les couches inférieures intérieures puis dans les couches supérieures extérieures.

4. Procédé selon l'une quelconque des revendications précédentes, **caractérisé en ce que** les semi-produits fibreux (23, 23') sont appliquées sous forme d'un faisceau de fibres unique sur la périphérie du support de réception, de préférence sous la forme d'un roving, l'application s'effectuant notamment avec seulement la largeur d'exactement un faisceau de fibres ou d'un roving et de préférence deux faisceaux de fibres ou rovings n'étant pas appliqués l'un à côté de l'autre mais seulement l'un sur l'autre sur le support de réception (11, 11').

5. Procédé selon l'une quelconque des revendications précédentes, **caractérisé en ce que** le support de réception (11, 11') est réalisé sous forme perméable pour l'agent d'imprégnation (27, 227), en particulier présente une pluralité de trous (14), d'évidements ou d'orifices ou similaires, de préférence suivant un agencement régulier et notamment à la manière d'un tamis ou d'une trame perforée.

6. Procédé selon l'une quelconque des revendications précédentes, **caractérisé par** la sollicitation avec une force centrifuge provoquée par une rotation du support de réception (11, 11').

7. Procédé selon l'une quelconque des revendications précédentes, **caractérisé en ce que** pour la traversée de l'agent d'imprégnation (27, 227), une enveloppe de type tuyau souple (238) en matériau flexible imperméable à l'air est amenée sur le support de réception (11, 11') et d'une part une conduite d'alimentation (232) pour l'agent d'imprégnation (27, 227) conduit à l'intérieur de l'enveloppe (238), en particulier à l'intérieur du support de réception (11, 11'), et d'autre part une conduite de sortie (233) pour l'agent d'imprégnation en excès à aspirer (27, 227) conduit hors de l'enveloppe (238), laquelle est guidée à un dispositif à dépression ou à une pompe à dépression (240).

8. Procédé selon l'une quelconque des revendications précédentes, **caractérisé en ce qu'**il est mis en oeuvre par l'introduction de l'agent d'imprégnation (27, 227) depuis l'intérieur avec une surpression et/ou par l'aspiration de l'agent d'imprégnation depuis la surface extérieure des semi-produits fibreux (23, 23') au moyen d'une dépression.

9. Dispositif pour l'imprégnation de semi-produits fibreux (23, 23') selon un procédé selon l'une quelconque des revendications précédentes, dans lequel un support de réception (11, 11') pour les semi-produits fibreux (23, 23') est réalisé sous forme perméable aux liquides, **caractérisé en ce qu'**une enveloppe de type tuyau souple (238) en matériau flexible imperméable à l'air est prévue, laquelle présente d'une part une conduite d'alimentation (232) pour l'agent d'imprégnation (27, 227) à l'intérieure de l'enveloppe (238), en particulier à l'intérieur du support de réception (11, 11') et d'autre part une conduite de sortie (233) pour l'agent d'imprégnation en excès à aspirer (27, 227) hors de l'enveloppe (238), laquelle est guidée à un dispositif à dépression ou à une pompe à dépression (240).

10. Dispositif selon la revendication 9, **caractérisé en ce que** le support de réception (11, 11') présente une pluralité de trous (14), d'évidements ou d'orifices ou similaires, de préférence suivant un agencement régulier et notamment à la manière d'un tamis ou d'une trame perforée.

11. Dispositif selon la revendication 9 ou 10, **caractérisé en ce que** le support de réception (11, 11') présente une perméabilité à l'agent d'imprégnation, différente par sections, répartie au-delà de sa surface ou de sa paroi perméable à l'agent d'imprégnation (27, 227).

12. Dispositif selon l'une quelconque des revendications 9 à 11, **caractérisé en ce que** le support de réception (11, 11') est essentiellement creux à l'intérieur et présente un espace intérieur (19, 19') qui est entouré par des parois perméables du support de réception (11, 11'), l'espace intérieur (19, 19') étant de préférence réalisé sous forme de canal.

13. Dispositif selon l'une quelconque des revendications 9 à 12, **caractérisé en ce que** le support de réception (11, 11') présente un corps de bobine cylindrique et/ou rond ou approximativement rond (13, 13') et présente des limitations (17, 17') saillant latéralement au-delà du corps de bobine, le corps de bobine (13, 13') étant de préférence très étroit et présentant notamment la largeur de seulement un faisceau de fibres ou roving, la largeur du corps de bobine (13, 13') étant de préférence de 2 mm à 15 mm.
